# EUROPÄISCHE PATENTSCHRIFT

(11) **EP 2 103 096 B1**
(45) Veröffentlichungstag und Bekanntmachung des Hinweises auf die Patenterteilung: **07.06.2017**
(21) Anmeldenummer: 07847342.8
(22) Anmeldetag: 26.11.2007
(51) Int. Cl.: H04M 3/436, H04L 12/58, H04L 29/06

(54) **VERFAHREN ZUR ABWEHR UNERWÜNSCHTER SPRACHLICHER WERBUNG FÜR PAKETORIENTIERTE KOMMUNIKATIONSNETZE**
METHOD FOR REPELLING UNWANTED SPEECH ADVERTISING FOR PACKET-ORIENTED COMMUNICATION NETWORKS
PROCÉDÉ POUR LA PROTECTION CONTRE DES PUBLICITÉS VERBALES INDÉSIRABLES POUR DES RÉSEAUX DE COMMUNICATION ORIENTÉS PAQUETS

(30) Priorität: 14.12.2006 DE 102006059148
(43) Veröffentlichungstag der Anmeldung: 23.09.2009
(73) Patentinhaber: Unify GmbH & Co. KG, 80807 München (DE)
(72) Erfinder: BOZIONEK, Bruno, 33178 Borchen (DE)
(74) Vertreter: Fritzsche, Thomas
(86) Internationale Anmeldenummer: PCT/EP2007/062809
(87) Internationale Veröffentlichungsnummer: WO 2008/071537

(56) Entgegenhaltungen:
- EP-A- 1 691 538
- WO-A-2006/103142
- ROHWER T ET AL: "TNG White Paper: Abwehr von Spam over Internet Telephony (SPIT-AL)" INTERNET CITATION, [Online] 31. Januar 2006 (2006-01-31), XP007902521 Gefunden im Internet: URL:http://www.spit-abwehr.de/Whitepaper_S PITAL_20060310.pdf> [gefunden am 2007-06-15]

## Beschreibung

In zunehmendem Maße werden Teilnehmer bzw. deren Endgeräte wie Personalcomputer über das Internet mit unerwünschter Telefonwerbung bzw. sprachlicher Werbung - in der Fachwelt auch als SPIT (SPam over Internet-Telephony) bezeichnet - konfrontiert. Die unerwünschte sprachliche Werbung wird durch Anrufautomaten durchgeführt, mit deren Hilfe willkürlich oder gezielt unerwünschte Nachrichten über VoIP (Voice over IP) - Techniken an Teilnehmer übermittelt werden und durch gespeicherte, vorgegebene Sprachinformation wird versucht, dem angerufenen Teilnehmer Waren oder Dienstleistungen zu verkaufen oder den angerufenen Teilnehmer dazu zu verleiten, einen teuren Rückruf bei einem Premium Service durchzuführen.

Eine Möglichkeit, sich vor unerwünschter sprachlicher Werbung teilweise zu schützen besteht darin, eine in der Fachwelt als "Robinsonliste" bekannte Liste zu benutzen. In die vom Deutschen Direkt-Marketing-Verband verwaltete Robinson- Liste können sich Teilnehmer eintragen lassen, um zu bewirken, dass die dem Verband angehörenden Werbefirmen den eingetragenen Teilnehmern keine telefonische Werbung oder Werbung per Fax oder E-mail zusenden. Es ist jedoch zu bemerken, dass die Nutzung dieser Listen durch die Werbefirmen freiwillig ist und nicht alle Werbefirmen dem Verband angehören. Auch ist diese Robinson- Liste nur in Deutschland wirksam, d.h. vom Ausland übermittelte telefonische Werbung kann dadurch nicht verhindert werden.

Eine weitere Möglichkeit, unerwünschte Werbung zu verhindern, besteht darin, einen Anrufbeantworter in jedem ankommenden Anruf einzuschleifen. Der Nachteil dieses Verfahrens ist eine unnötige Belegung von Ressourcen (Amtsleitungen, Speicherplatz) beim Angerufenen. Außerdem erreicht der Anrufer über dieses Verfahren eventuell sein Ziel eines Rückrufes zeitversetzt.

Eine zusätzliche Möglichkeit besteht darin, dass eine Whitelist und eine Blacklist mit Identifikation bzw. Rufnummern vorgesehen ist, bei denen keine oder eine unerwünschte Werbung bzw. sprachliche Werbung zu erwarten ist. Die Identifikation des Rufenden eines ankommenden Anrufes wird mit den Identifikationen in den Listen verglichen. Ist bei einem Anruf die Identifikation des Rufenden nicht in den Listen enthalten, wird der Anruf zu einer Anrufbehandlung gesteuert, mit deren Hilfe untersucht wird, ob eine Werbung empfangen wird. In Abhängigkeit von dem Untersuchungsergebnis werden die Listen entsprechend aktualisiert.

Das Dokument ROHWER T ET AL: "TNG White Paper: Abwehr von Spam over Internet Telephony (SPIT-AL)" INTERNET CITATION, [Online] 31. Januar 2006 (2006-01-31), XP007902521 beschreibt ein Verfahren zur Abwehr unerwünschter Angriffe, bei dem neben einer Blacklist und einer Whitelist eine Greylist verwendet wird. Anrufern, die weder auf der Blacklist noch auf der Whitelist eingetragen sind, wird ein "besetzt"-Zeichen signalisiert und ihre Identität wird in die Greylist eingetragen. Wenn ein Anrufer, der auf der Greylist steht, innerhalb einer bestimmten Zeit erneut anruft, wird er direkt zum gewünschten Teilnehmer durchgestellt.

Das Dokument WO 2006/103142 beschreibt das Verwenden einer Blacklist und einer Whitelist zur Abwehr unerwünschter Anrufe.

Die der Erfindung zugrunde liegende Aufgabe besteht darin, die Abwehr von Anrufen mit Spam over Internet Telephony SPIT hinsichtlich des Komforts zu verbessern. Die Aufgabe wird durch die Merkmale der Patentansprüche 1 und 8 gelöst.

Ein wesentlicher Aspekt eines erfindungsgemäßen Verfahrens ist darin zu sehen, dass im paketorientierten Netz für die Endgeräte des Netzes ein Dienst zur Führung von Listen vorgesehen ist, der eine erste und zweite Liste von Identifikationen bereitstellt, bei denen eine oder keine unerwünschte Werbung zu erwarten ist. Ein ankommender Anruf wird an den Dienst gesteuert und die Identifikation des Rufenden wird mit den Identifikationen in den Listen verglichen und ein Anruf, dessen Identifikation des Rufenden nicht in den Listen enthalten ist, wird zu dem adressierten Endgerät gesteuert. Am Endgerät wird der ankommende Anruf ausgegeben und nach einem Feststellen eines Anrufs mit unerwünschter oder ohne unerwünschter Werbung wird eine am Endgerät eingegebene erste oder zweite Information an den Dienst im paketorientierten Netz übermittelt und die Identifikation des ankommenden Anrufs der ersten oder zweiten Liste zugeordnet. Bei einem Anruf, bei dem noch keine Bewertung hinsichtlich einer Telefonwerbung durchführbar ist, wird eine am Endgerät eingegebene dritte Information an den Dienst im paketorientierten Netz übermittelt und die Identifikation des Anrufs wird einer dritten Liste zugeordnet.

Ein wesentlicher Vorteil der Erfindung ist darin zu sehen, dass für jedes Endgerät die Listen durch einen Dienst im Netz geführt werden und durch einfache Eingaben am Endgerät eine Zuordnung der im paketorientierten Netz gehaltenen Listen ermöglicht wird, wodurch der Komfort für das Handling der Listen für den Teilnehmer erhöht wird. Auch können bei zentral im Netz gehaltenen Listen die Identifikationen von mehreren Endgeräten mit unerwünschter sprachlicher Werbung bzw. Spam over Internet Telephony Nachrichten (SPIT) ermittelt und die jeweils noch nicht vorhandenen Identifikationen in den Listen der mehreren Endgeräte aktualisiert werden. Alternativ kann für alle Endgeräte des paketorientierten Netz jeweils eine einzige erste, zweite und dritte Liste bereitgestellt bzw. verwaltet werden, in die nach einer Bewertung eines Anrufs durch die Endgeräte und einer Eingabe einer entsprechenden Information die Identifikationen der Anrufe in die betreffende Liste eingetragen werden. Hierbei kann eine wesentlich höhere Effektivität bei der Ermittlung der Identifikationen mit unerwünschter sprachlicher Werbung erreicht werden.

Vorteilhaft ist erste Information durch eine erste Kennung oder eine erste Tastenfunktion, die zweite Information durch eine zweite Kennung oder zweite Tastenfunktion und die dritte Information durch eine dritte Kennung oder dritte Tastenfunktion repräsentiert und in Abhängigkeit von der Eingabe der ersten, zweiten oder dritten Kennung oder dem Aktivieren der ersten, zweiten oder dritten Tastenfunktion wird die Identifikation des ausgegebenen Anrufs der ersten, zweiten oder dritten Liste zugeordnet. Hierbei kann die Kennung eine numerische oder alphanumerische sein und die Tastenfunktion kann durch eine mechanische Taste oder durch eine Tastenfunktion in der Anzeigeeinheit realisiert werden, wobei durch die Tastenfunktion wiederum eine numerische oder alphanumerische Information gebildet wird.

Gemäß einer Weiterbildung des erfindungsgemäßen Verfahrens wird bei einer am Endgerät eingegebenen und an den Dienst im paketorientierten Netz übermittelten vierten Information der ankommende Anruf zu einer automatischen Anrufbehandlung gesteuert und das durch eine Kennzahl oder Tastenfunktion repräsentierte Untersuchungsergebnis an den Dienst im paketorientierten Dienst übermittelt und in Abhängigkeit vom übermittelten Untersuchungsergebnis wird die Identifikation des Anrufs der ersten, zweiten dritten Liste zugeordnet. Durch die Verwendung der gleichen Kennungen oder Tastenfunktionen wird eine Konvertierung des Untersuchungsergebnisses im paketorientierten Netz vermieden.

Nach einer vorteilhaften Weiterbildung der Erfindung wird durch die automatische Anrufbehandlung der Anruf untersucht, ob der Anruf durch einen Anrufautomat mit automatisch angesagter Telefonwerbung durchgeführt wird. Dies kann vorteilhaft dadurch erfolgen, dass in der Anrufbehandlung aufgrund des Sprechpausen-/Sprechdauer-Verhältnisses der empfangenen Sprachinformation festgestellt wird, ob der aktuelle Anruf durch einen Anrufautomat mit automatisch angesagter telefonisicher Werbung durchgeführt wird. Alternativ wird durch die Anrufbehandlung eine Sprach-Interaktion mit dem Anrufenden durchgeführt, wobei eine vorgegebene sprachliche Reaktion auf ein Sprachanfrage erwartet wird, und dass bei nicht zutreffender sprachlicher Reaktion des Anrufenden der Anruf als Anruf mit telefonischer Werbung festgestellt wird. Durch diese vorteilhaften Weiterbildungen kann mit wirtschaftlich geringem Aufwand festgestellt werden, ob ein Anrufautomat anruft, der telefonische Werbung übermitteln will, oder ob ein Teilnehmer, d.h. eine Person anruft.

Besonders vorteilhaft ist die Erfindung in einer Diensteeinrichtung des paketorientierten Netzes integriert, wobei die Diensteeinrichtung durch einen Gatekeeper oder in einen Back-to-Back-User-Agent in einem paketorientierten Netz gemäß dem H.323- Protokoll oder gemäß dem SIP- Protokoll realisiert ist.

Weitere vorteilhafte Weiterbildungen der Erfindung sind den Unteransprüchen zu entnehmen.

Im Folgenden werden die Erfindung und die Weiterbildungen anhand von zwei zeichnerischen Darstellungen erläutert. Dabei zeigen
- Figur 1: eine Netztopologie, in der die Erfindung realisiert ist, und
- Figur 2: in einem Ablaufdiagramm die Behandlung eines ankommenden Anrufs in der dargestellten Netztopologie.

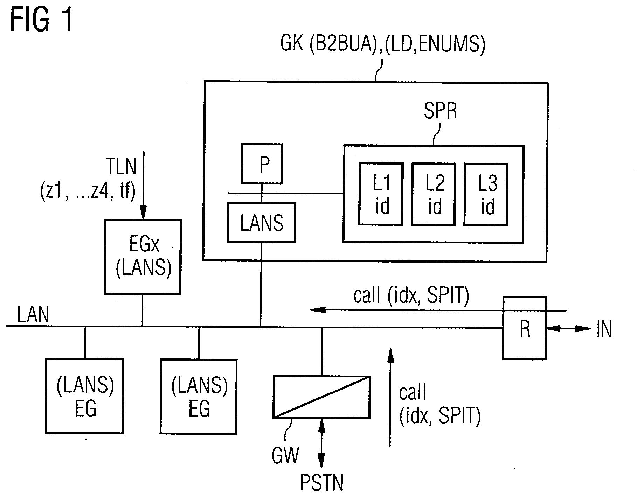

Figur 1 zeigt beispielhaft eine Netztopologie, in der das erfindungsgemäße Verfahren eingesetzt werden kann. An ein lokales Netz LAN - im weiteren mit LAN bezeichnet - sind Endgeräte EG von Teilnehmern TLN angeschlossen, wobei die Endgeräte EG über eine LAN-Schnittstelle LANS - beispielsweise Ethernet-Schnittstelle - an das LAN - beispielsweise ein Ethernet angeschlossen sind. Die LAN- Schnittstelle LANS stellt hierbei das Empfangsmittel für alle vom LAN übermittelten Informationen dar. Die Endgeräte für lokale Netze sind häufig durch Personalcomputer mit Telefonfunktion oder IP-Telefone für lokale Netzwerke realisiert. Für das LAN ist beispielsweise ein Ethernetprotokoll und für die Telefonfunktion bzw. die Voice over IP Funktion im Personalcomputer oder im Telefon für lokale Netze das H.323- Protokoll oder das SIP- Protokoll vorgesehen.

Das H.323- Protokoll ist ein ITU- Standard, in dem ein Protokoll definiert wird, die eine audio-visuelle Kommunikation auf jedem Netzwerk, das Pakete überträgt, ermöglicht. Der H.323-Standard besteht aus einer ganzen Reihe von Protokollen für die Signalisierung, zum Austausch von Endgerätefunktionalitäten, zur Verbindungskontrolle, zum Austausch von Statusinformationen und zur Datenflusskontrolle. Der Multimedia-Standard kennt drei verschiedene Signalisierungsfunktionen zwischen dem H.245- Steuerungskanal, dem Q.931- Signalisierungskanal und dem RAS-Kanal. Eine wesentliche Komponente für die IP- Telefonie ist neben den Endgeräten ein über eine LAN-Schnittstelle LANS an das LAN angeschlossener Gatekeeper GK, der die im H.323-Rahmenstandard definierten Schnittstellenfunktionen umsetzt und der hauptsächlich der Emulation des PSTN- Verbindungsaufbaus über das IP-Netz und der Anpassung der Datenströme dient. Dazu übernimmt er die Signalisierung, die notwendige Übersetzung von Telefonnummern in IP-Adressen und umgekehrt sowie später die Paketierung des synchronen Datenstroms aus dem Telefonnetz in IP-Pakete nach dem H.225-Standard. Für die Verbindung mit dem PSTN (Public Switched Telephone Network) ist ein ebenfalls an das LAN angeschlossener Gateway GW vorgesehen, in dem die Telefoninformation aus dem PSTN in Pakete eingefügt wird und umgekehrt.

Das SIP-Protokoll ist funktional vergleichbar dem H.323-Protokoll und kann interaktive Kommunikationsdienste einschließlich Sprache über IP- Netze übertragen. Es ist einfacher als H.323 und ist zudem skalierbar durch die Verwendung eines Transaktionsmodells anstatt eines Verbindungsmodells. Die SIP-Informationen können über das TCP-Protokoll oder das UDP-Protokoll transportiert werden und besitzen eine offene internetbasierte Struktur und ermöglichen Signalisierungsdienste wie etwa die Übermittlung der Identität des Anrufers oder die Anrufweiterleitung in IP- basierten Netzen. Des Weiteren das Halten von Anrufen, Wartemusik, Anruf-Transfer mit Rückfrage, Anrufweiterleitung, das Heranholen von Anrufen, das Einleiten von Konferenzschaltungen, die Rufwiederholung u.v.m. Für die Verbindungs- und Leistungsmerkmalsteuerung mit SIP- Protokoll ist anstelle des Gatekeepers GK ein SIP Proxy Server oder ein Back to Back User Agent vorgesehen werden - in der Figur durch die Bezeichnung (B2BUA) angedeutet. Hierbei sind User Agenten in den Endgeräten bzw. in den SIP- Telefonen vorgesehen, mit denen Anwendungen in den SIP- Telefonen realisiert sind und eine Schnittstelle zwischen dem Anwender und dem SIP- Netzwerk bilden. Ein Back to Back User Agent B2BUA ist eine Anwendung, die als Vermittler zwischen zwei Teilnehmern bzw. SIP- Telefonen fungiert, jedoch beiden Teilnehmern gegenüber als Endpunkt auftritt.

Das LAN ist des Weiteren mit einem Router R verbunden, der als Übergangseinrichtung zum Internet IN fungiert. Der Anschluss an das Internet erfolgt üblicherweise über einen Zugriffsrouter eines Internet Service Providers - nicht dargestellt.

Für das Ausführungsbeispiel sei angenommen, dass im Gatekeeper GK oder im Back to Back User Agent B2BUA eine SPIT-Routine SPR realisiert ist, in der eine erste Liste L1 bzw. eine Black List, eine zweite Liste L2 bzw. White List und eine dritte Liste L3 bzw. Greylist für jedes Endgerät geführt bzw. verwaltet werden. Die SPIT- Routine SPR stellt einen Dienst LD zum Führen von Listen L und ein Zuordnungsmittel dar, mit dessen Hilfe die Identifikationen in eine der drei Listen L1..L3 eingetragen werden. Des Weiteren fungiert die SPIT- Routine SPIT als Vergleichsmittel, mit dem ein Vergleich einer in einem ankommenden Anruf call enthaltenen Identifikation id mit Identifikationen id in den Listen L1 bis L3 durchgeführt werden kann.

In die erste Liste L1 werden Identifikationen id von Anrufen eingetragen, bei denen eine telefonische bzw. sprachliche Werbung SPIT ermittelt wurde. Der zweiten Liste L2 werden Identifikationen von Anrufen zugeordnet, die keine sprachliche Werbung enthalten. In die dritte Liste L3 werden Identifikationen eingefügt, bei denen eine Bewertung hinsichtlich sprachlicher Werbung SPIT nicht durchführbar ist.
Für das Ausführungsbeispiel sei angenommen, dass ein Anruf call, der eine unerwünschte sprachliche Werbung SPIT enthalten kann, entweder vom PSTN oder vom Internet IN über den Router R und über das LAN zu dem Gateway GW gesteuert wird - in der Figur 1 durch mit call bezeichnete Pfeile dargestellt.

Ein Anruf call aus dem Internet IN weist üblicherweise eine Internetadresse und ein Anruf call aus dem PSTN weist eine Rufnummer rn gemäß E.164 auf. Bei einem Voice over IP- Anruf call kann auch ein ENUM (Telephone Numbering Mapping) Service verwendet werden. ENUM löst das Problem der Abbildung von realen Telefonnummern auf Internet Adressen. Damit kann ein vorhandener VoIP-Telefon-Anschluss gefunden und eine Verbindung kostensparend über das Internet oder über einen Gateway GW ins PSTN hergestellt werden.

Für die Steuerung des Gatekeepers GK bzw. des Back to Back User Agents B2BUA ist ein Prozessorsystem P vorgesehen, wobei mit Hilfe des Prozessorsystems P bzw. mit den Programmen des Prozessorsystem P die ankommenden Anrufe call an den Dienst LD oder das Endgerät EG vermittelt werden, das durch die übermittelte Identifikation id adressiert ist.

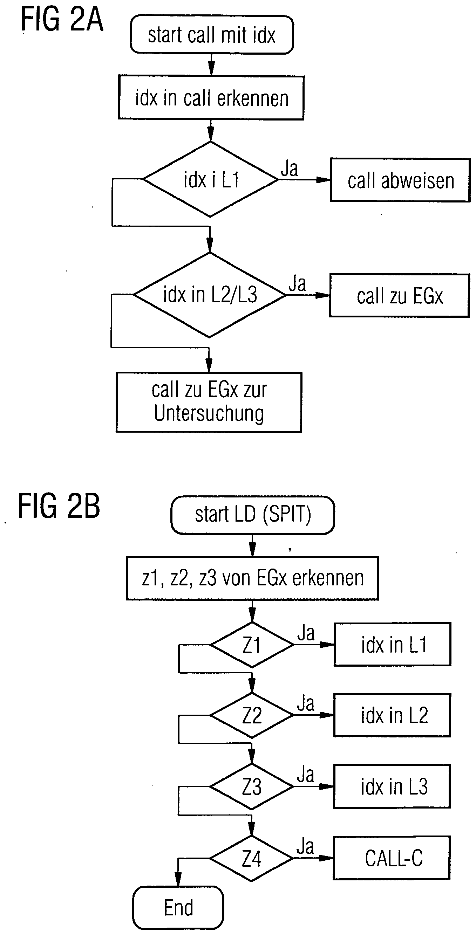

Erfindungsgemäß wird gemäß Ablaufdiagramm in Figur 2a vor einer Vermittlung eines ankommenden Anrufs call die Identifikation id des Anrufs call mit Hilfe des Prozessorsystems P ermittelt und an die SPIT- Routine SPR gesteuert. Mit Hilfe der SPIT- Routine SPR wird die ermittelte Identifikation idx des Anrufs call mit den Identifikationen id in den Listen L1,L2,L3 verglichen. Ist die ermittelte Identifikation idx in der ersten Liste enthalten, wird der Anruf call abgewiesen, d.h. der Anruf call wird nicht zum adressierten Endgerät EGx vermittelt. Ist die Identifikation idx in der zweiten Liste L2 enthalten, wird der Anruf call an das adressierte Endgerät EGx vermittelt. Ist die Identifikation idx in der dritten Liste L3 enthalten, wird der Anruf call ebenfalls an das adressierte Endgerät weitervermittelt, jedoch wird eine Information mit übermittelt, die dem Endgerät bzw. dem Teilnehmer anzeigt, dass für diese Identifikation id bzw. Anruf keine Bewertung hinsichtlich sprachlicher Werbung möglich ist.

Im adressierten Endgerät EGx wird der Anruf call signalisiert, d.h. es werden Ruftöne oder eine Rufinformation im Endgerät gebildet und akustisch und/oder visuell ausgeben. Nachdem der Teilnehmer des Endgeräts EGX den Anruf call entgegengenommen hat - beispielsweise durch Abheben eines Telefonhörers oder durch Aktivieren der Telefonfunktion im Personalcomputer - wird der Anruf call akustisch am Endgerät EGx ausgegeben. Nach einer Überprüfung durch den Teilnehmer, ob es sich bei dem Anruf call um einen Anruf call mit unerwünschter telefonsicher Werbung oder ohne telefonsiche Werbung handelt, wird durch den Teilnehmer eine entsprechende Information eingegeben.

Bei der eingegebenen Information kann es sich um eine durch die Telefontastatur oder PC- Tastatur eingegebene Kennzahl z oder eine Information handeln, die durch eine Tastenfunktion tf, d.h. durch Betätigen einer Taste am Telefon gebildet wird. Die durch eine Tastenfunktion tf gebildete Information kann eine beliebige numerische oder alpha-numerische Information darstellen. Für das Ausführungsbeispiel sei angenommen, dass eine erste bis vierte Kennzahl z1..z4 für eine Zuordnung zur ersten, zweiten oder dritten Liste L1..L3 oder für ein Weiterleiten zu einer automatischen Anrufbehandlung CALL-C vorgesehen ist.

Wird durch den Teilnehmer eine erste Kennzahl z1 eingegeben, wird diese zusammen mit der Identifikation idx des Anrufs call gemäß dem verwendeten LAN- Protokoll an den Gatekeeper GK bzw. Back to Back User Agent übermittelt. Im Gatekeeper GK wird, wie in Figur 2b dargestellt, die Kennzahl z1 und die Identifikation idx an die SPIT- Routine SPR übermittelt und die Identifikation idx wird in die erste Liste L1 eingetragen. Entsprechend wird verfahren, sofern die zweite oder dritte Kennzahl z2,z3 eingegeben und übermittelt wird, d.h. die mit übermittelte Identifikation id wird in die zweite bzw. dritte Liste L2,L3 eingetragen.

Alternativ kann vor Annahme des Anrufs call durch den Teilnehmer die Anruferidentität ermittelt werden. Hierzu sind beispielsweise das Reverse ENUM- Verfahren oder eine Random Test- Methode möglich. Beim ENUM- Verfahren wird überprüft, ob die Voice over IP Identität des Anrufers im ENUM- Service ENUMS bekannt ist, wobei der ENUM- Service im Gatekeeper GK bzw. LAN verfügbar ist - in der Figur durch die Bezeichnung ENUMS angedeutet. Durch eine Anfrage an den ENUM- Service ENUMS kann in diesem aus der IP- Adresse oder einer spezieller ENUM- Identifikation die dazugehörige E.164- Adresse ermittelt und sofern möglich überprüft werden. Ist ein Überprüfungsergebnis verfügbar, wird dieses an das betroffene Endgerät EG übermittelt, und nach einer Eingabe einer entsprechenden ersten oder zweiten Kennzahl z1..z1 wird diese zusammen mit der Identifikation id an den Gatekeeper GK übermittelt. Im Gatekeeper wird die Identifikation id in die erste oder zweite Liste L1,L2 eingetragen. Ist eine E.164-Nummer ermittelt, jedoch kein Überprüfungsergebnis verfügbar, kann der Anruf call zur weiteren Überprüfung durch den Teilnehmer an dessen Endgerät EG angenommen und für eine Untersuchung akustisch ausgegeben werden. Das Überprüfungsergebnis kann erfindungsgemäß dem Gatekeeper GK mitgeteilt werden. Ist durch den ENUM- Service ENUMS keine Identifikation id ermittelbar wird eine dritte Kennzahl z3 eingegeben und zusammen mit der Identifikation id an den Gatekeeper GK übermittelt. In diesem wird die Identifiation id mit Hilfe der SPIT-Routine SPR in die dritte Liste L3 eingetragen.

Bei Eingabe und Übermittlung der vierten Kennzahl z4 wird durch den Gatekeeper GK bzw. Back to Back User Agent der Anruf call an eine automatische Anrufbehandlung CALL-C vermittelt. Die automatische Anrufbehandlung CALL-C kann im Gatekeeper GK realisiert oder als eigenständige Einrichtung an das LAN angeschlossen sein. Die Anrufe können in der automatischen Anrufbehandlung mit mehreren alternativen Verfahren untersucht werden.

Gemäß einem ersten Verfahren wird das Sprechpausen-/ Sprechdauer- Verhältnis der empfangenen Sprachinformation ermittelt. Aufgrund dieses Verhältnisses kann relativ sicher festgestellt werden, ob es sich bei der empfangenen Sprachinformation um ein Sprachinformation einer Person oder eines Anrufautomaten mit sprachlicher Werbung SPIT handelt. Dies ist möglich, da die Sprechpausen bei Anrufeinrichtungen bzw. Anrufautomaten wesentlich kürzer und die Sprechdauern länger sind als bei Anrufen von Teilnehmern bzw. Personen.

Bei einem weiteren Verfahren, Anrufe von Anrufautomaten festzustellen, werden Sprachproben der ankommenden Sprachinformation aufgezeichnet und mit bereits aufgezeichneten Sprachproben von Anrufautomaten mit telefonischer Werbung SPIT verglichen. Bei einer weitgehenden Übereinstimmung ist davon auszugehen, dass ein Anruf mit telefonischer Werbung SPIT vorliegt.

Gemäß einem weiteren Verfahren zum Feststellen von Anrufen von Anrufautomaten wird von der Anrufbehandlung CALL-C eine Interaktion mit dem ankommenden Anruf call versucht, d.h. es wird eine Eingabeaufforderung übermittelt, auf die bestimmte Eingaben durch den Anrufenden erwartet werden. Reagiert der Anrufende nicht, ist davon auszugehen, dass es sich um einen Anruf mit telefonischer Werbung SPIT handelt.

In Abhängigkeit von den Untersuchungsergebnissen wird für die Identifikation id des Anrufs call eine entsprechende Kennzahl z1..z3 gebildet und an den Gatekeeper GK übermittelt - siehe Figur 2b. Im Gatekeeper GK wird entsprechend der übermittelten Kennzahl z1..z3 die Identifikation idx in eine der drei Listen L1..L3 eingetragen.

Die Erfindung ist nicht auf dieses Ausführungsbeispiel begrenzt, sondern kann in allen Kommunikationsnetzen mit unterschiedlichen Identifikationen bzw. Adressierungen eingesetzt werden, wobei hierbei für die verschiedenen Netze verschiedene Listen verwendet werden können. Auch sind darauf abgestimmte Verfahren zum Feststellen bzw. zum Erkennen oder Ermitteln von Anrufen mit sprachlicher Werbung möglich.

## Patentansprüche

1. Verfahren zum Führen von Listen zur Abwehr unerwünschter sprachlicher Werbung (SPIT) im paketorientierten Netz (LAN),
- bei dem im paketorientierten Netz (LAN) für Endgeräte (EG) des Netzes ein Dienst (LD) zur Führung von Listen (L) vorgesehen ist, der eine erste und zweite Liste (L1,L2) von Identifikationen (id,rn) bereitstellt, bei denen eine oder keine unerwünschte sprachliche Werbung (SPIT) zu erwarten ist,
- bei dem ein Anruf (call) an den Dienst (LD) gesteuert und die Identifikation (idx) des Anrufs (call) mit den Identifikationen (id,rn) in den Listen (L1,L2) verglichen wird,
- bei dem am Endgerät (EGx) der Anruf (call) nach einer Annahme ausgegeben wird, und
- bei dem nach einem Feststellen eines Anrufs (call) mit unerwünschter oder ohne sprachliche Werbung (SPIT) eine am Endgerät (EGx) eingegebene erste oder zweite Information (z1,z2) an den Dienst (LD) im paketorientierten Netz (LAN) übermittelt und die Identifikation (idx) des Anrufs (call) der ersten oder zweiten Liste (L1,L2) zugeordnet wird, **dadurch gekennzeichnet, dass**
- ein Anruf (call), dessen Identifikation (idx) nicht in der ersten oder zweiten Liste (L1, L2) enthalten ist, zu dem adressierten Endgerät (EGx) gesteuert wird,
- und bei einem Anruf (call), bei dem keine Bewertung hinsichtlich einer sprachlichen Werbung (SPIT) durchführbar ist, eine am Endgerät (EGx) eingegebene dritte Information (z3) an den Dienst (LD) im paketorientierten Netz (LAN) übermittelt wird und die übermittelte Identifikation (idx) des Anrufs (call) einer dritten Liste (L3) zugeordnet wird,
- und, falls die Identifikation (idx) in der dritten Liste (L3) enthalten ist, mit der Steuerung des Anrufs (call) zu dem adressierten Endgerät (EGx) eine Information mit übermittelt wird, die dem Endgerät (EGx) anzeigt, dass für diese Identifikation (idx) keine Bewertung hinsichtlich sprachlicher Werbung (SPIT) möglich ist.

2. Verfahren nach Anspruch 1, **dadurch gekennzeichnet,**
**dass** bei einer am Endgerät (EGx) eingegebenen und an den Dienst (LD) im paketorientierten Netz (LAN) übermittelten vierten Information (z4) der Anruf (call) zu einer automatischen Anrufbehandlung (CALL-C) gesteuert wird, und dass das durch eine Kennzahl (z1..z3) oder Tastenfunktion (tf) repräsentierte Untersuchungsergebnis an den Dienst (LD) im paketorientierten Netz (LAN) übermittelt und in Abhängigkeit vom übermittelten Untersuchungsergebnis die Identifikation (id) des Anrufs (call) der ersten oder zweiten oder dritten Liste (L1..L3) zugeordnet wird.

3. Verfahren nach einem der Ansprüche 1 oder 2, **dadurch gekennzeichnet,**
**dass** die erste bis vierte Information (z1..z4) durch eine erste bis vierte Kennung (z1..z4) oder eine erste bis vierte Tastenfunktion (tf) repräsentiert ist, und
**dass** in Abhängigkeit von der Eingabe der ersten, zweiten oder dritten Kennung (z1..z3) oder dem Aktivieren der ersten oder zweiten oder dritten Tastenfunktion (tf) die Identifikation (idx) des ausgegebenen Anrufs (call) der ersten oder zweiten oder dritten Liste (L1..L3) zugeordnet wird.

4. Verfahren nach einem der Ansprüche 1 bis 3, **dadurch gekennzeichnet,**
**dass** die unerwünschte sprachliche Werbung (SPIT) durch eine Spam over Internet Telephony Nachricht (SPIT) repräsentiert ist, und dass die Identifikation (id) durch eine Internetadresse (ia) oder Rufnummer (rn) oder eine ENUM- Information (enumi) angegeben ist.

5. Verfahren nach einem der Ansprüche 1 bis 4, **dadurch gekennzeichnet,**
**dass** die Identifikationen (id) der ersten und zweiten Liste (L1,L2) von mehreren Endgeräten (EG) ermittelt und die jeweils noch nicht eingetragenen Identifikationen (id) in den ersten und zweiten Listen (L1,L2) der mehreren Endgeräte (EG) aktualisiert werden oder
**dass** jeweils eine einzige erste, zweite und dritte Liste für zumindest einen Teil der Endgeräte (EG) des paketorientierten Netzes (LAN) geführt und aktualisiert wird.

6. Verfahren nach Anspruch 3, **dadurch gekennzeichnet,**
**dass** ein Anruf (call) mit Hilfe des ermittelten Sprechpausen-/Sprechdauer-Verhältnisses der empfangenen Sprachinformation oder mit Hilfe von gespeicherten Sprachproben von Anrufautomaten mit automatisch angesagter sprachlicher Werbung untersucht wird, ob der Anruf (call) durch einen Anrufautomat mit automatisch angesagter Werbung (SPIT) durchgeführt wird.

7. Verfahren nach einem der Ansprüche 1 bis 6, **dadurch gekennzeichnet,**
**dass** der Dienst (LD) zum Führen der Listen (L1..L3) sowie die ankommenden Anrufe (call) in einem Gatekeeper (GK) oder einem Back-to-Back-User-Agent (B2BUA) eines paketorientierten Netzes (LAN) gemäß dem H.323- Protokoll oder gemäß dem SIP-Protokoll gesteuert werden.

8. Diensteeinrichtung zum Führen von Listen zur Abwehr unerwünschter sprachlicher Werbung (SPIT) in einem paketorientierten Netz (LAN),
- mit einem Dienst (LD) zum Führung von Listen (L1..L3), wobei eine erste und zweite Liste (L1,L2) von Identifikationen (id) vorgesehen ist, bei denen eine oder keine unerwünschte sprachliche Werbung (SPIT) zu erwarten ist,
- mit Vergleichsmitteln (P) zum Vergleichen einer an den Dienst (LD) gesteuerten Identifikation (idx) eines Anrufs (call) mit den Identifikationen (id) in den Listen (L1,L2),
- mit Empfangsmitteln (LANS) zum Empfang einer ersten oder zweiten Information (z1,z2) vom Endgerät (EGx), wobei nach einem Feststellen eines Anrufs (call) mit unerwünschter oder ohne sprachlicher Werbung (SPIT) am Endgerät (EGx) eine erste oder zweite Information (z1,z2) eingegeben und an die Diensteinrichtung (GK,B2BUA) übermittelt wird, und
- mit Zuordnungsmitteln (SPR) zum Zuordnen der Identifikation (idx) des Anrufs (call) zur ersten oder zweiten Liste (L1..L2) in Abhängigkeit von der empfangenen ersten oder zweiten Information (z1..z2), **gekennzeichnet durch**
- Steuermittel (P) zum Weiterleiten eines Anrufs (call), dessen Identifikation (id) des Rufenden nicht in den Listen (L1,L2) enthalten ist, zu dem adressierten Endgerät (EGx), wobei
- die Empfangsmittel (LANS) zum Empfang einer vom Endgerät (EGx) übermittelten und für einen Anruf (call) eine keine durchführbare Bewertung hinsichtlich der sprachlichen Werbung (SPIT) anzeigenden dritten Information (z3) ausgestaltet sind,
- die Zuordnungsmittel (SPR) zum Zuordnen der Identifikation (idx) des Anrufs (call) zu einer dritten Liste (L3) vorgesehen sind,
- und, falls die Identifikation (idx) in der dritten Liste (L3) enthalten ist, mit der Steuerung des Anrufs (call) zu dem adressierten Endgerät (EGx) eine Information mit übermittelt wird, die dem Endgerät (EGx) anzeigt, dass für diese Identifikation (idx) keine Bewertung hinsichtlich sprachlicher Werbung (SPIT) möglich ist.

9. Diensteeinrichtung nach Anspruch 8, derart ausgestaltet,
dass die Empfangsmittel (LANS) zum Empfang einer vom Endgerät (EG) übermittelten vierten Information (z4,tf),
dass die Steuermittel (P) zum Steuern des Anrufs (call) an eine automatische Anrufbehandlung (CALL-C),
dass die Empfangsmittel (LANS) zum Empfang eines durch eine Kennzahl (z1..z4) oder Tastenfunktion (tf) repräsentierendes Untersuchungsergebnis und
dass die Zuordnungsmittel (SPR) zum Zuordnen der Identifikation (ID) zu der ersten oder zweiten Liste (L1,L2) in Anhängigkeit vom übermittelten Untersuchungsergebnis vorgesehen sind.

10. Diensteeinrichtung nach einem der Ansprüche 8 oder 9,
wobei eine erste bis vierte Information (z1..z4,tf) durch eine erste bis vierte Kennung (z1..z4) oder eine erste bis vierte Tastenfunktion (tf) repräsentiert ist, **dadurch gekennzeichnet,**
**dass** Erkennungsmittel (P) zum Erkennen der empfangenen ersten bis vierten Kennung (z1..z4) oder dem empfangenen Aktivieren der ersten bis vierten Tastenfunktion (tf) vorgesehen sind.

11. Verfahren nach einem der Ansprüche 8 bis 10, **dadurch gekennzeichnet,**
**dass** die Diensteeinrichtung durch einen Gatekeeper (GK) oder einen Back-to-Back-User-Agent (B2BUA) in einem paketorientierten Netz (LAN) gemäß dem H.323- Protokoll oder gemäß dem SIP- Protokoll realisiert ist.

## Claims

1. A method for managing lists for repelling unwanted speech advertising (SPIT) in a packet-oriented network (LAN),
- in which, in a packet-oriented network (LAN) for end devices (EG) of the network, a service (LD) for managing lists (L) is provided, said service providing a first and a second list (LI, L2) of identifiers (id, rn) in which unwanted speech advertising (SPIT) is or is not to be expected,
- in which a call is directed to the service (LD) and the identifier (idx) of the call is compared with the identifiers (id, rn) in the lists (LI, L2),
- in which, at the end device (EGx), the call is transmitted following acceptance, and
- in which, after a call is determined to be with or without unwanted speech advertising (SPIT), a first or second piece of information (z1, z2) input at the end device (EGx) is transmitted to the service (LD) in the packet-oriented network (LAN), and the identifier (idx) of the call is assigned to the first or second list (LI, L2), **characterized in that**
- if the identifier (idx) of a call is not contained in the first or second list (LI, L2), the call is directed to the addressed end device (EGx),
- and if a call cannot be evaluated with respect to speech advertising (SPIT), a third piece of information (z3) input at the end device (EGx) is transmitted to the service (LD) in the packet-oriented network (LAN), and the transmitted identifier (idx) of the call is assigned to a third list (L3),
- and if the identifier (idx) is contained in the third list (L3), when the call is directed to the addressed end device (EGx) a piece of information is transmitted with it, indicating to the end device (EGx) that no evaluation with respect to speech advertising (SPIT) is possible for that identifier (idx).

2. The method according to claim 1, **characterized in that** when a fourth piece of information (z4) is input at the end device (EGx) and is transmitted to the service (LD) in the packet-oriented network (LAN), the call is directed to automatic call handling (CALL-C), and **in that** the result of the check, represented by an ID number (z1...Z3) or key function (tf), is transmitted to the service (LD) in the packet-oriented network (LAN), and the identifier (id) of the call is assigned to the first or second or third list (L1..L3) on the basis of the transmitted result of the check.

3. The method according to claim 1 or 2, **characterized in that** the first through fourth pieces of information (z1..Z4) are represented by first through fourth ID numbers (z1..Z4) or by first through fourth key functions (tf), and
**in that** the identifier (idx) of the directed call is assigned to the first or second or third list (L1..L3) on the basis of the input of the first, second or third ID number (z1..Z3) or the activation of the first or second or third key function (tf).

4. The method according to any of claims 1 to 3, **characterized in that** the unwanted speech advertising (SPIT) consists of a Spam over Internet Telephony message (SPIT), and **in that** the identifier (id) is indicated by an Internet address (ia) or call number (rn) or ENUM information (enumi).

5. The method according to any of claims 1 to 4, **characterized in that**
the identifiers (id) of the first and second lists (LI, L2) are determined by a plurality of end devices (EG), and the identifiers (id) that have not yet been recorded are updated in the first and second lists (LI, L2) of the plurality of end devices (EG), or **in that** individual first, second and third lists are respectively managed and updated for at least some the end devices (EG) of the packet-oriented network (LAN).

6. The method according to claim 3, **characterized in that** a call is checked by determining the speech pause/speech duration ratio of the received speech information or by using stored speech samples from automatic calling units with automatically announced speech advertising, to determine whether the call is being made by an automatic calling unit with automatically announced advertising (SPIT).

7. The method according to any of claims 1 to 6, **characterized in that** the service (LD) for managing the lists (L1..L3) and the incoming calls is controlled in a gatekeeper (GK) or a back-to-back user agent (B2BUA) of a packet-oriented network (LAN) according to the H.323 protocol or according to the SIP protocol.

8. Service equipment for managing lists for repelling unwanted speech advertising (SPIT) in a packet-oriented network (LAN),
- comprising a service (LD) for managing lists (L1..L3), wherein a first and a second list (LI, L2) of identifiers (id) are provided, in which unwanted speech advertising (SPIT) is or is not to be expected,
- comparison means (P) for comparing an identifier (idx) of a call that has been directed to the service (LD) with the identifiers (id) in the lists (LI, L2),
- receiving means (LANS) for receiving a first or a second piece of information (z1, z2) from the end device (EGx), wherein, after a call is determined to be with or without unwanted speech advertising (SPIT), a first or second piece of information (z1, z2) is input at the end device (EGx) and transmitted to the service equipment (GK, B2BUA), and
- assigning means (SPR) for assigning the identifier (idx) of the call to the first or second list (L1..L2) on the basis of the received first or second piece of information (z1..z2), **characterized by**
- control means (P) for directing a call for which the identifier (id) of the calling party is not contained in the lists (L1, L2) to the addressed end device (EGx), wherein
- the receiving means (LANS) are configured for receiving a third piece of information (z3) transmitted by the end device (EGx) and indicating that no evaluation can be made for a call with respect to speech advertising (SPIT),
- the assigning means (SPR) is provided for assigning the identifier (idx) of the call to a third list (L3),
- and, if the identifier (idx) is contained in the third list (L3), when the call is directed to the addressed end device (EGx) a piece of information is also transmitted, indicating to the end device (EGx) that no evaluation with respect to speech advertising (SPIT) is possible for that identifier (idx).

9. The service equipment according to claim 8, configured in such a way that the receiving means (LANS) is provided for receiving a fourth piece of information (z4, tf) transmitted by the end device (EG),
that the control means (P) is provided for directing the call to automatic call handling (CALL-C),
that the receiving means (LANS) is provided for receiving a result of the check represented by an ID number (z1..z4) or key function (tf), and
that the assigning means (SPR) is provided for assigning the identifier (ID) to the first or second list (L1, L2) on the basis of the transmitted result of the check.

10. The service equipment according to either of claims 8 and 9, wherein a first through fourth piece of information (z1..z4, tf) is represented by a first through fourth identifier (z1..z4) or a first through fourth key function (tf),
**characterized in that**
detection means (P) are provided for detecting the received first through fourth identifier (z1..z4) or the received activation of the first through fourth key functions (tf).

11. A method according to any of claims 8 to 10, **characterized in that**
the service equipment is implemented as a gatekeeper (GK) or a back-to-back user agent (B2BUS) in a packet-oriented network (LAN) in accordance with the H.323 protocol or in accordance with the SIP protocol.

## Revendications

1. Procédé pour établir des listes pour la protection contre une publicité verbale indésirable (SPIT) dans le réseau orienté paquets (LAN),
- selon lequel, dans le réseau orienté paquets (LAN), pour des appareils terminaux (EG) du réseau, il est prévu un service (LD) pour l'établissement de listes (L) qui prépare une première et une deuxième liste (L1,L2) d'identifications (id,rn) dans lesquelles on doit s'attendre à une ou à aucune publicité verbale indésirable (SPIT),
- selon lequel, un appel (call) est acheminé au service (LD) et l'identification (idx) de l'appel (call) est comparée aux identifications (id,rn) dans les listes (L1,L2),
- selon lequel, dans l'appareil terminal (EGx), l'appel (call) est délivré après une réception, et
- selon lequel, après une constatation d'un appel (call) avec une publicité indésirable ou sans publicité verbale (SPIT), une première ou une deuxième information (z1,z2) entrée sur l'appareil terminal (EGx), est transmise au service (LD) dans le réseau orienté paquets (LAN) et l'identification (idx) de l'appel (call) est attribuée à la première ou à la deuxième liste (L1,L2), **caractérisé en ce que**
- un appel (call), dont l'identification (idx) n'est pas contenue dans la première ou dans la deuxième liste (L1,L2) est acheminé à l'appareil terminal (EGx) adressé,
- et avec un appel (call), avec lequel aucune évaluation en ce qui concerne une publicité verbale (SPIT) n'est exécutable, une troisième information (z3) entrée sur l'appareil terminal (EGx) est transmise au service (LD) dans le réseau orienté paquets (LAN) et l'identification (idx) transmise de l'appel (call) est attribuée à une troisième liste (L3),
- et, dans le cas où l'identification (idx) est contenue dans la troisième liste (L3), avec l'acheminement de l'appel (call) à l'appareil terminal (EGx) adressé, il est transmis une information qui montre à l'appareil terminal (EGx) qu'aucune évaluation en ce qui concerne une publicité verbale (SPIT) n'est possible pour cette identification (idx).

2. Procédé selon la revendication 1, **caractérisé**
**en ce que**, avec une quatrième information (z4) entrée sur l'appareil terminal (EGx) et transmise au service (LD) dans le réseau orienté paquets (LAN), l'appel (call) est acheminé à un traitement d'appel automatique (CALL-C) et en ce que le résultat d'analyse représenté par un nombre indicatif (z1..z3) ou une fonction de touche (tf) est transmis au service (LD) dans le réseau orienté paquets (LAN) et, en fonction du résultat d'analyse transmis, l'identification (id) de l'appel (call) est attribuée à la première ou à la deuxième ou à la troisième liste (L1..L3).

3. Procédé selon l'une quelconque des revendications 1 ou 2, **caractérisé**
**en ce que** la première jusqu'à la quatrième information (z1..z4) sont représentées par un premier jusqu'à un quatrième indicatif (z1..z4) ou par une première jusqu'à une quatrième touche de fonction (tf), et en ce que, en fonction de l'entrée du premier, deuxième ou troisième indicatif (z1..z3) ou de l'activation de la première ou deuxième ou troisième touche de fonction (tf), l'identification (idx) de l'appel délivré (call) est attribuée à la première ou deuxième ou troisième liste (L1..L3).

4. Procédé selon l'une quelconque des revendications 1 à 3, **caractérisé**
**en ce que** la publicité verbale indésirable (SPIT) est représentée par un message de courriel indésirable sur téléphonie IP (SPIT) et en ce que l'identification (id) est indiquée par une adresse Internet (ia) ou un numéro d'appel (rn) ou une information ENUM (enumi).

5. Procédé selon l'une quelconque des revendications 1 à 4, **caractérisé**
**en ce que** les identifications (id) de la première et de la deuxième liste (L1,L2) sont déterminées par plusieurs appareils terminaux (EG) et en ce que les identifications (id) pas encore inscrites sont actualisées respectivement dans les première et deuxième listes (L1,L2) des multiples appareils terminaux (EG) ou
**en ce qu'**une seule première, deuxième et troisième liste est établie et actualisée respectivement pour au moins une partie des appareils terminaux (EG) du réseau orienté paquets (LAN).

6. Procédé selon la revendication 3, **caractérisé**
**en ce que**, à l'aide du rapport déterminé pauses verbales/durées verbales des informations verbales reçues ou à l'aide d'échantillons verbaux enregistrés d'automates d'appels avec une publicité verbale annoncée automatiquement, un appel (call) est analysé pour savoir si l'appel (call) est exécuté par un automate d'appels avec publicité verbale annoncée automatiquement (SPIT).

7. Procédé selon l'une quelconque des revendications 1 à 6, **caractérisé**
**en ce que** le service (LD) pour l'établissement des listes (L1..L3) ainsi que les appels arrivants (call) sont commandés dans un portier (GK) ou dans un agent d'utilisateur de boucle locale (B2BUA) d'un réseau orienté paquets (LAN) selon le protocole H.323 ou selon le protocole SIP.

8. Dispositif de service pour l'établissement de listes pour la protection contre une publicité verbale indésirable (SPIT) dans un réseau orienté paquets (LAN),
- avec un service (LD) pour l'établissement de listes (L1..L3), dans lequel sont prévues une première et une deuxième liste (L1,L2) d'identification (id) dans lesquelles on doit s'attendre à une ou à aucune publicité verbale indésirable (SPIT),
- avec des moyens de comparaison (P) pour la comparaison d'une identification (idx), acheminée au service (LD), d'un appel (call) aux identifications (id) dans les listes (L1,L2),
- avec des moyens de réception (LANS) pour la réception d'une première ou d'une deuxième information (z1,z2) de l'appareil terminal (EGx), dans lequel, après une détermination d'un appel (call) avec une publicité indésirable ou sans publicité verbale (SPIT), une première ou une deuxième information (z1,z2) est entrée sur l'appareil terminal (EGx) et transmise à l'installation de service (GK,B2BUA), et
- avec des moyens d'attribution (SPR) pour l'attribution de l'identification (idx) de l'appel (call) à la première ou à la deuxième liste (L1..L2) en fonction de la première ou de la deuxième information (z1..z2) reçue, **caractérisé par**
- des moyens d'acheminement (P) pour le transfert d'un appel (call), dont l'identification (id) de l'appelant n'est pas contenue dans les listes (L1,L2), à l'appareil terminal (EGx) adressé,
dans lequel
- les moyens de réception (LANS) sont conçus pour la réception d'une troisième information (z3) transmise par l'appareil terminal (EGx) et ne montrant pas pour un appel (call) une évaluation exécutable en ce qui concerne la publicité verbale (SPIT),
- les moyens d'attribution (SPR) sont prévus pour l'attribution de l'identification (idx) de l'appel (call) à une troisième liste (L3),
- et, dans le cas où l'identification (idx) est contenue dans la troisième liste (L3), avec l'acheminement de l'appel (call) à l'appareil terminal (EGx) adressé est transmise une information qui montre à l'appareil terminal (EGx) que, pour cette identification (idx), aucune évaluation en ce qui concerne une publicité verbale (SPIT) n'est possible.

9. Installation de service selon la revendication 8, conçue de manière telle
que les moyens de réception (LANS) sont prévus pour la réception d'une quatrième information (z4,tf) transmise par l'appareil terminal (EG),
que les moyens d'acheminement (P) sont prévus pour l'acheminement de l'appel (call) à un traitement d'appel automatique (CALL-C),
que les moyens de réception (LANS) sont prévus pour la réception d'un résultat d'analyse représenté par un nombre indicatif (z1..z4) ou par une touche de fonction (tf), et
que les moyens d'attribution (SPR) sont prévus pour l'attribution de l'identification (ID) à la première ou à la deuxième liste (L1,L2) en fonction du résultat d'analyse transmis.

10. Installation de service selon l'une quelconque des revendications 8 ou 9, dans lequel une première à une quatrième information (z1..z4,tf) sont représentées par un premier jusqu'à un quatrième indicatif (z1..z4) ou par une première jusqu'à une quatrième touche de fonction (tf),
**caractérisé**
**en ce que** des moyens de reconnaissance (P) sont prévus pour la reconnaissance du premier jusqu'au quatrième indicatif (z1..z4) ou de l'actionnement reçu de la première jusqu'à la quatrième touche de fonction (tf).

11. Procédé selon l'une quelconque des revendications 8 à 10,
**caractérisé**
**en ce que** l'installation de service est réalisée par un portier (GK) ou par un agent d'utilisateur de boucle locale (B2BUA) dans un réseau orienté paquets (LAN) selon le protocole H.323 ou selon le protocole SIP.
